# EUROPEAN PATENT APPLICATION

(11) **EP 4 768 771 A1**
(43) Date of publication of application: **01.07.2026**
(21) Application number: 25226124.3
(22) Date of filing: 22.12.2025
(51) Int. Cl.: F16L 43/00, F16L 55/16, F04B 53/00

(54) **MAINTENANCE KIT FOR A HYDRAULIC SYSTEM**

(30) Priority: 27.12.2024 IT 202400030075
(71) Applicant: Dab Pumps S.p.A., 35035 Mestrino (Padova) (IT)
(72) Inventor: DAL CANTO, Riccardo, 35035 MESTRINO (PD) (IT)
(74) Representative: De Filippis, Sara

(57) **Abstract**

Maintenance kit for a hydraulic system equipped with suction (13) and delivery (14) pipes that define a first connection interface (61), the kit comprising:
- at least one pump, said pump having a second connection interface configured for reversible coupling with said first connection interface (61);
- a connector element (50) equipped with a third connection interface (51, 52);
wherein the third connection interface (51, 52) of said connector element (50) is dimensionally and functionally identical to the second connection interface of said pump, so that said connector element (50) and said pump are mutually interchangeable for coupling with the second connection interface of the hydraulic system,
said first, second, and third connection interfaces being configured for coupling by means of reversible fastening means (60) that ensures a hermetic seal of the system under pressure without the need for additional sealing materials.

## Description

### FIELD OF THE INVENTION

The present invention relates to the field of hydraulic systems, and more particularly to a connector element, a base for a pumping device, and a method for connecting the suction and delivery of a hydraulic system in the absence of a pumping device.

### STATE OF THE ART

In the field of hydraulic systems, it is common to use pumping devices to provide the necessary pressure and flow for the operation of the system. These pumping devices typically comprise a pump, an electric motor to drive it, and various auxiliary components such as valves and sensors. The pumping devices are usually connected to the hydraulic system via suction and delivery connections, which allow the fluid to pass through the pump.

The installation and maintenance of pumping devices in a hydraulic system can present some critical issues. In particular, when it is necessary to temporarily remove the pump for repair or replacement interventions, the flow of fluid in the system is interrupted, causing potential service disruptions. Moreover, the operations of disconnecting and reconnecting the pump can be complex and require long times, especially in systems with tight spaces or particular configurations.

A further problem is the need to ensure service continuity even in the event of a pump malfunction. In traditional systems, the failure of a pump often leads to the interruption of the hydraulic flow until the faulty device is repaired or replaced.

Therefore, the need has been appreciated for a connector element for hydraulic systems that can overcome one or more of these problems, in particular by ensuring the continuity of the water service to the end-user in a simple, fast, and reliable manner during maintenance operations, without the need for complex bypass systems integrated into the domestic installation.

### OBJECT OF THE INVENTION

An object of the invention is therefore a maintenance kit for a hydraulic system. The kit comprises at least one pump and a connector element. The system has a first connection interface, the pump has a second connection interface, suitable for connecting to the first, while the connector element is equipped with a third connection interface. The third connection interface of the connector element is dimensionally and functionally identical to the second connection interface of the pump. This makes the connector element and the pump mutually interchangeable for coupling with a first connection interface of the hydraulic system.

An advantage of this configuration is that it allows the continuity of the water service to the end-user to be maintained even when the pump is removed for maintenance or repair. The installer can simply replace the pump with the connector element, avoiding flow interruptions and the need to install complex and expensive permanent bypass systems in the installation.

According to the invention, the connection interfaces are configured for coupling by means of reversible fastening means that ensure a hermetic seal of the system under pressure without the need for additional sealing materials such as PTFE tape or sealants, to connect the suction and delivery of said hydraulic system to each other in the absence of a pumping device and to maintain the continuity of the hydraulic flow.

Furthermore, according to the invention, the first connection interface may comprise a shaped seat, while the second and third connection interfaces may comprise through holes. The reversible fastening means may comprise a U-shaped elastic clip configured to pass through the through holes and be received in the shaped seat, so as to engage the interfaces in a secure and reversible connection.

A further advantage of the present invention is that this specific mechanical coupling provides an exceptionally robust and reliable connection. The configuration with a U-clip that engages in a shaped seat prevents accidental disconnections due to vibrations or pressure spikes, while ensuring that the fastening and removal operation remains quick and does not require the use of tools.

Furthermore, according to the invention, the connector element may have a U-shaped tubular structure. This element is equipped with a first and a second end suitable for being reversibly connected to the suction and delivery pipes, and has a center distance between said ends equal to the existing center distance between the pipes of the system.

An advantage of this feature is that it ensures a perfect and immediate alignment between the connector element and the hydraulic system. This eliminates the possibility of installation errors and mechanical stress on the components due to misalignment, ensuring a precise and effortless coupling that contributes to the longevity and reliability of the entire system.

A further aspect of the present disclosure is that the reversible fastening means comprise two U-shaped elastic clips and an application tool. Said tool is configured to receive the clips in a position corresponding to the connection interfaces, facilitating their assembly.

It is also an advantage of the present invention to provide superior ergonomics and speed of assembly. The application tool allows the operator to position and insert both clips simultaneously and with one hand, leaving the other hand free. This significantly speeds up the operation and makes it easier, especially in tight or difficult-to-access spaces.

In another aspect, described herein is a kit that further comprises at least one sealing gasket on at least one of the ends of the connector element. This gasket is suitable for ensuring a hermetic seal of the system when under pressure.

A significant advantage of this aspect is the guarantee of a perfect and reliable hydraulic seal without the need to manually apply additional sealants. The pre-installed gasket provides an engineered sealing solution that prevents leaks, simplifies assembly, and ensures that the system can be disassembled and reassembled multiple times while maintaining the same sealing effectiveness. A further aspect of the present disclosure is directed to a kit in which the connector element is made of plastic material.

A further advantage deriving from the use of plastic material is the combination of lightness, corrosion resistance, and low production cost. The plastic material allows for efficient mass production, is not subject to rust or degradation in contact with water, and minimizes the risk of fluid contamination, making it ideal for potable water applications.

In an aspect of the invention, the object described herein relates to a kit that further comprises a base for a pumping device. Said base is equipped with a fourth connection interface, which is dimensionally and functionally identical to the first connection interface of the system.

An advantage of this aspect is the creation of a perfectly modular and standardized system. The base defines a fixed and repeatable connection interface, on which both the pump and the connector element can be mounted interchangeably. This offers a complete and ready-to-use solution that not only simplifies the initial installation but also constitutes the fundamental platform on which the entire logic of rapid and interchangeable maintenance of the invention is based.

The integration of the connector element directly into the base of the pumping device offers a complete and ready-to-use solution for managing maintenance operations, reducing intervention times and improving the overall efficiency of the hydraulic system.

### BRIEF DESCRIPTION OF THE FIGURES

The aspects of the invention will be described, by way of example, with reference to the following drawings, in which:
FIG. 1 illustrates an exploded side view of a maintenance kit according to the invention, showing the connector element of the invention with a base for a pumping device.
FIG. 2 shows a top view of the base and connector of figure 1, assembled.
FIG. 3 shows a side view of the assembly of figure 2, in which the fluid flow is highlighted by arrows.
FIG. 4 shows a front view of the base with the connector element assembled, highlighting the reversible fastening means.
FIG. 5 shows a sectional view of the assembly, illustrating the internal connection between the components.
FIG. 6 shows an exploded view illustrating the removal of a pumping device from the base.
FIG. 7 shows an exploded view illustrating the installation of the connector element on the base in place of the pumping device.

Herein, it is understood that "connection" indicates a link between two components. The connection can be direct, indirect, physical, or non-physical. The term "connection" can be considered synonymous with "coupling," "linkage," "attachment," or the like. "Reversible" means that it can be removed and reapplied multiple times without damaging the components. The term "suitable for" indicates that an element is designed or configured to perform a certain function, even if it is not necessarily performing it at that moment. "Center distance" refers to the distance between the centers of two elements, measured along a straight line. "Hydraulic system" indicates a system that uses pressurized fluids. "Pumping device" refers to an apparatus designed to move fluids by applying pressure.

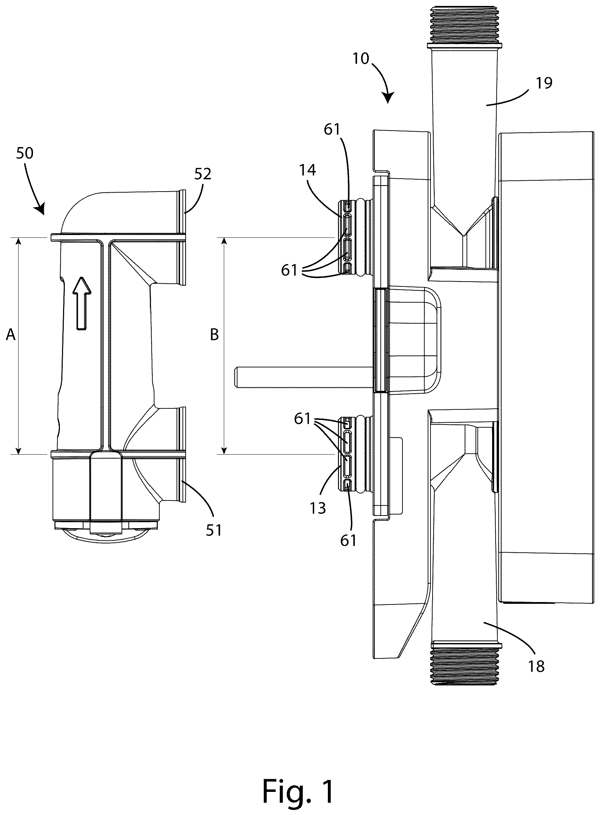

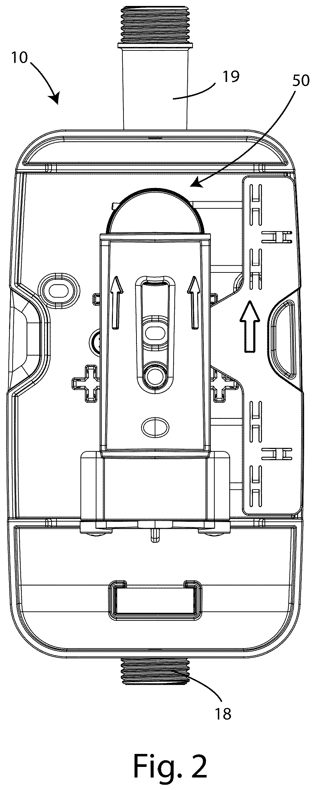

FIG. 1 and FIG. 2 illustrate a base 10 for a pumping device. The base 10 comprises a suction connector 13 and a delivery connector 14. The suction connector 13 and the delivery connector 14 are configured to connect respectively the suction and delivery of the pumping device to a first tubular element 18 and a second tubular element 19 of a hydraulic system.

The base 10 has a generally rectangular shape with rounded corners, as shown in the front view of Fig. 2. On the surface of the base 10, there are various mounting features and indicators, including directional arrows and alignment elements.

The suction connector 13 and the delivery connector 14 are arranged on the base 10 with a specific center distance, indicated as dimension B in Fig. 1. This arrangement allows the connection of the pumping device to the hydraulic system through the first tubular element 18 and the second tubular element 19.

The first tubular element 18 and the second tubular element 19 allow the pump base 10 to be integrated into the hydraulic system, permitting the flow of fluid through the system when the pump is in operation.

With reference to the figures, a connector element 50 is presented, designed to be used in a hydraulic system during maintenance operations. The connector element 50 performs an important function in maintaining the continuity of the hydraulic flow when a pumping device is removed from the system for maintenance or replacement.

The connector element 50 has a tubular structure, for example with a U-shaped configuration, as clearly illustrated in the figures. This configuration allows the connector element 50 to effectively connect the suction and delivery points of the hydraulic system, temporarily bypassing the absent pumping device.

A relevant feature of the connector element 50 is its versatility of application. The connector element 50 can be applied directly to the hydraulic system even when a pump base 10 is not present. This flexibility allows the use of the connector element 50 in different system configurations, ensuring the continuity of the hydraulic flow in various maintenance or system modification situations.

The connector element 50 comprises a first end 51 and a second end 52. The first end 51 and the second end 52 of the connector element 50 are configured to connect respectively to the suction connector 13 and the delivery connector 14 of the pump base 10.

The connector element 50 has the same proprietary interfaces as the pump it replaces. This allows the connector element 50 to connect perfectly to the existing connectors on the pump base 10 without the need for adapters or modifications.

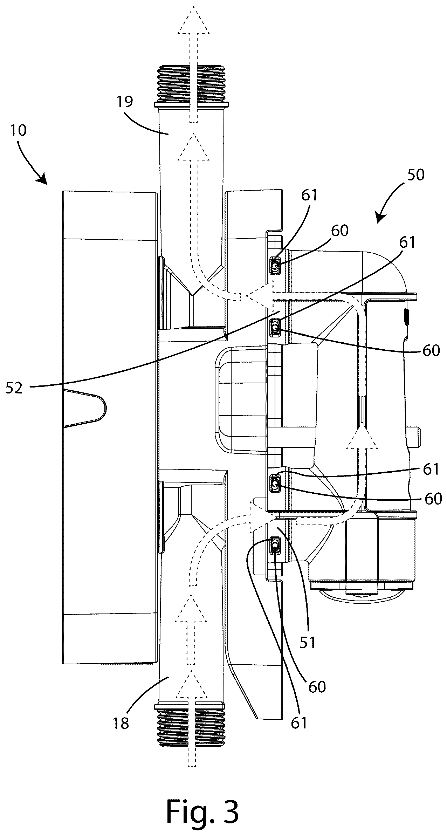

The tubular structure of the connector element 50 allows the passage of fluid between the first end 51 and the second end 52, thus creating a direct connection between the suction and delivery of the hydraulic system in the absence of the pumping device (see arrows in figure 3).

With reference now to FIG. 1, an exploded side view of a maintenance kit according to the invention is illustrated. The kit comprises a base 10 and a connector element 50. The base 10 is intended to receive a pumping device and is equipped with a suction connector 13 and a delivery connector 14. These connectors are arranged at a fixed distance, defined as center distance B. The base 10 is suitable for being connected to a hydraulic system via a first tubular element 18 (in suction) and a second tubular element 19 (in delivery).

The connector element 50 has a rigid tubular structure in a "U" shape, with a first end 51 and a second end 52. The fixed distance between the ends 51 and 52 defines the center distance A of the connector element. The center distance A of the connector element 50 is equal to the center distance B of the base 10. This dimensional correspondence (A = B) ensures perfect alignment and full interchangeability between a pumping device and the connector element 50 on the same base 10.

FIG. 2 shows a top view of the assembled system, with the connector element 50 installed on the base 10. In this view, the compactness of the assembly can be appreciated. The upper surface of the base 10 has mounting features and indicators, such as directional arrows, which guide the operator in the correct positioning of the connector element 50 or the pumping device.

FIG. 3 illustrates, in a side view, the operation of the connector element 50 as a bypass path. The arrows indicate the flow of the fluid: it enters from the first tubular element 18, passes through the suction connector 13 of the base, travels through the U-shaped body of the connector element 50, and exits through the delivery connector 14 to continue into the second tubular element 19. A direct hydraulic connection is thus created that bypasses the point where the pumping device would be installed, ensuring the continuity of flow in the system.

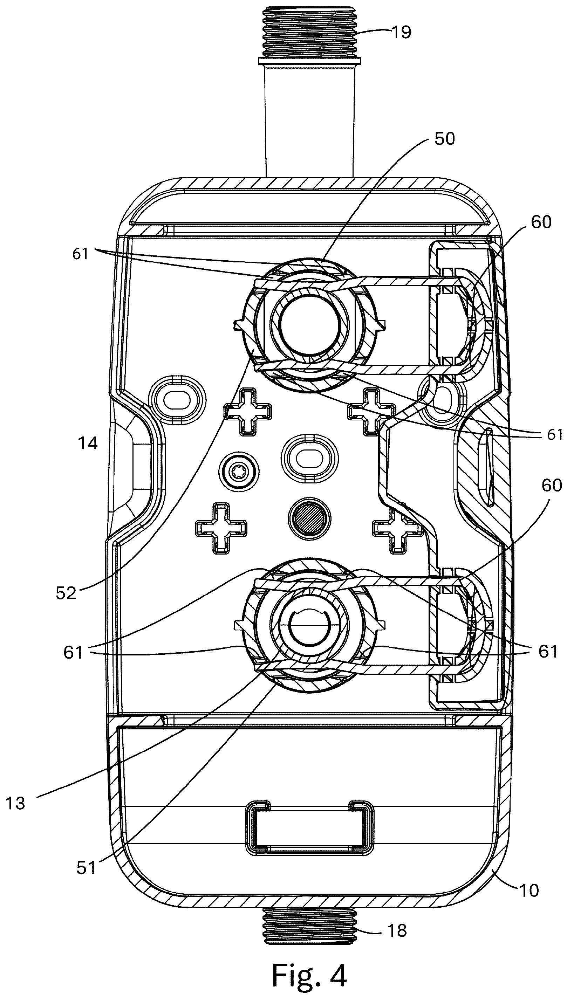

FIG. 4 shows a front view of the assembly, highlighting in detail the reversible fastening means. These means consist of U-shaped clips 60. The connector element 50, at its ends 51 and 52, has through holes 62. The base 10 is provided with seats or housings 61 at the ends of the delivery 14 and suction 13 connectors. For fastening, the operator inserts the U-clips 60 through the holes 62 of the ends 51 and 52, causing them to engage in the seats 61, which are shaped to receive the U-clips 60 and hold them in position. This simple and quick operation securely locks the connector element 50 to the base 10. On the surface of the connector element, the indications "IN" and "OUT" are also visible to guide the correct connection.

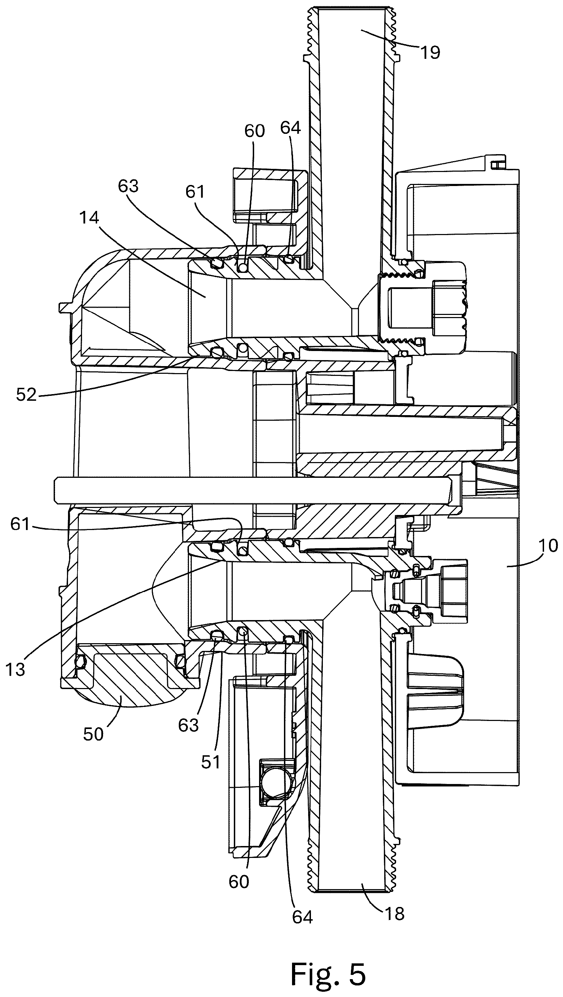

FIG. 5 is a sectional view showing the internal connection. It can be observed how the internal channel of the connector element 50 fluidically connects the suction connector 13 with the delivery connector 14 of the base 10. At the interface between the ends 51 and 52 of the connector and the respective connectors 13 and 14 of the base, there are annular gaskets 63 which, once compressed by the tightening action of the clips 60, ensure a perfect hydraulic seal.

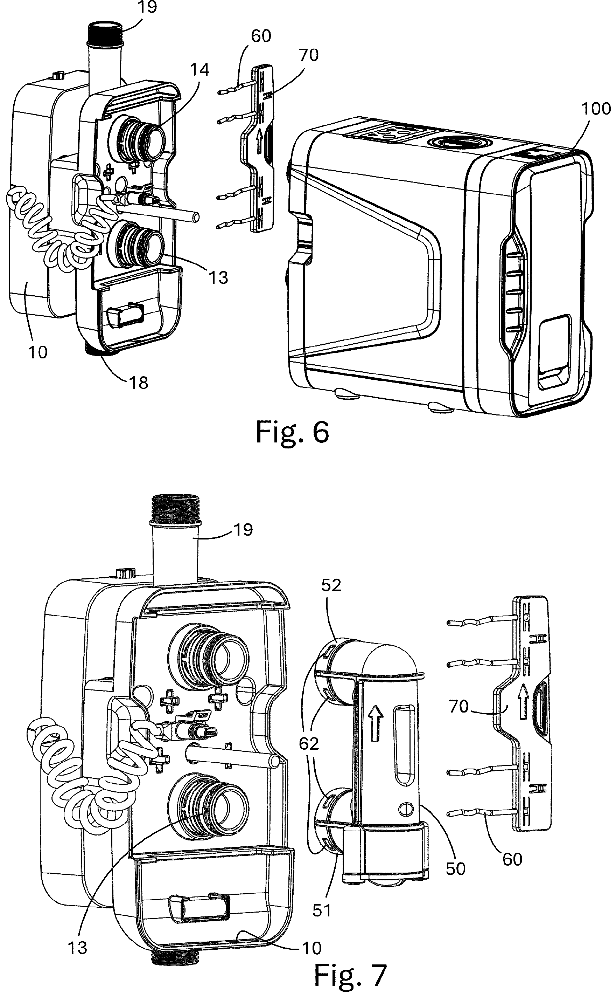

FIG. 6 illustrates the first step of a maintenance operation: the removal of the pumping device 100. An application device 70 is shown, equipped with two seats suitable for each receiving a U-clip 60, so that they are positioned at the correct center distance for application to the connector 50 and the pump 100. This application device 70 is particularly advantageous because it allows the removal operation to be performed with the gesture of a single hand.

The pumping device 100 is initially mounted on the base 10 and locked in position by the U-clips 60, which engage with the ends 51 and 52 of the device and with the seats 61 of the base. The figure shows the removal of the U-clips 60 - mounted on a single application device 70 - and the subsequent removal of the pumping device 100, freeing up the base 10.

Also in this case, the application device 70 facilitates the operation by allowing one hand to be used for positioning the connector element 50, and simultaneously the other hand can insert both clips, speeding up the bypass assembly operations and allowing the operator to immediately attend to the necessary operations for pump maintenance.

Finally, FIG. 7 illustrates the second and final step of the operation: the installation of the connector element 50. The connector element 50 is positioned on the base 10, in the space left free by the pumping device 100. Thanks to the correspondence of the connector center distances (A = B), the alignment is immediate and error-free. The operator then uses the same application device 70, which receives the bases of the U-clips 60 leaving their arms free to fix the connector element 50. The U-clips 60 are inserted through the holes 62 of the ends 51 and 52 of the element 50 and engage in the seats 61 of the suction 13 and delivery 14 connectors of the base 10, completing the installation of the bypass quickly, securely, and without the aid of specific tools.

When the connector element 50 is installed on the pump base 10, it bypasses the suction 13 and delivery 14 connectors, closing the hydraulic circuit without interrupting the water flow. This allows the user to continue using the domestic water network while the pumping device is undergoing maintenance or repair.

The distance between the first end 51 and the second end 52 of the connector element 50, indicated as dimension A in FIG. 1, corresponds to the spacing B between the suction connector 13 and the delivery connector 14 on the pump base 10. This dimensional correspondence allows for a precise coupling of the connector element 50 with the pump base 10.

In particular, the configuration of pressure O-ring seals 63, together with the holes 62 on the ends 51 and 52 to receive the arms of the U-clips 60, eliminates the need to use additional sealing materials, such as PTFE tape, during the assembly. This ensures a reliable seal and further simplifies installation and maintenance operations, helping to maintain the integrity of the system under pressure.

As to the reversible fastening means, the first end 51 and the second end 52 of the connector element 50 are equipped with through holes 62 specifically configured to receive the arms of the U-clips 60. These U-clips 60 are the same ones used to hermetically connect a pumping device to the pump base 10, in similar shaped seats 61 in the delivery 14 and suction 13 connectors. This design allows for a hermetic and robust connection to be ensured, without the need for additional sealing materials such as PTFE tape or sealants, facilitating installation, removal, and maintenance operations, and ensuring the compatibility and reversibility of the system.

The features of any example or embodiment described above can be combined to create further examples or embodiments without losing the desired effect. It should be understood that the description of an embodiment or an example provided above is for illustrative purposes only, and various modifications could be made by one skilled in the art. Furthermore, one skilled in the art will recognize that numerous further modifications and combinations of various aspects are possible. Accordingly, the described aspects are intended to encompass all alterations, modifications, and variations that fall within the scope of the enclosed claims.

## Claims

1. Maintenance kit for a hydraulic system equipped with suction (13) and delivery (14) pipes that define a first connection interface (61), the kit comprising:
- at least one pump (100), said pump (100) having a second connection interface configured for reversible coupling with said first connection interface (61);
- a connector element (50) equipped with a third connection interface (51, 52);
**characterized in that**
the third connection interface (51, 52) of said connector element (50) is dimensionally and functionally identical to the second connection interface of said pump, so that said connector element (50) and said pump (100) are mutually interchangeable for coupling with the second connection interface of the hydraulic system,
said first, second, and third connection interfaces being configured for coupling by means of reversible fastening means (60) that ensures a hermetic seal of the system under pressure without the need for additional sealing materials.

2. Maintenance kit for a hydraulic system according to claim 1, **characterized in that**
the first connection interface comprises a shaped seat (61),
the second and third connection interfaces comprise through holes (62),
the reversible fastening means (60) comprising a U-shaped elastic clip (60) configured to pass through said through holes (62) and to be received in the shaped seat (61), so as to engage the interfaces in a secure and reversible connection.

3. Maintenance kit for a hydraulic system according to claim 1 or 2, **characterized in that** the connector element (50) has:
- a U-shaped tubular structure, equipped with a first end (51) and a second (52) end suitable for being reversibly connected respectively to said suction (13) and delivery (14) pipes of said first interface;
- a center distance (A) between said first and second ends (51, 52) equal to the center distance (B) present between said suction (13) and delivery (14) pipes.

4. Maintenance kit for a hydraulic system according to claim 3, **characterized in that** the reversible fastening means (60) comprising two U-shaped elastic clips (60) and an application tool (70), said tool being configured to receive said at least U-shaped elastic clips (60) in a position corresponding to the connection interfaces.

5. Maintenance kit for a hydraulic system according to any one of the preceding claims, **characterized in that** it further comprises at least one sealing gasket on at least one of said first and second ends (51, 52) of the connector element (50) to ensure a hermetic seal of the system under pressure.

6. Maintenance kit for a hydraulic system according to any one of the preceding claims, wherein the connector element (50) is made of plastic material.

7. Maintenance kit for a hydraulic system according to any one of the preceding claims, **characterized in that** it further comprises a base (10) for a pumping device, equipped with a fourth connection interface, dimensionally and functionally identical to the first connection interface.
